# EUROPÄISCHE PATENTANMELDUNG

(11) **EP 4 831 496 A1**
(43) Veröffentlichungstag der Anmeldung: **28.10.2026**
(21) Anmeldenummer: 25172099.1
(22) Anmeldetag: 23.04.2025
(51) Int. Cl.: F16B 7/04

(54) **VERBINDUNGSVORRICHTUNG ZUM VERBINDEN VON PROFILSTÄBEN**

(71) Anmelder: APS Arioso GmbH, 91564 Neuendettelsau (DE)
(72) Erfinder: Rossi, Mario Luigi, 94564 Neuendettelsau (DE)
(74) Vertreter: von Pinkowski, Elisabeth

(57) **Zusammenfassung**

Die Erfindung besteht aus einer Verbindungsvorrichtung zur Verbindung von Profilen in Gehäusebausystemen, wobei die Verbindungsvorrichtung aus zwei Teilen eines Eckverbinders (1, 2) besteht.

## Beschreibung

Die Erfindung betrifft Verbindungsvorrichtungen zum Verbinden von Profilstäben zur Herstellung von Gehäuserahmen für diverse Geräte.

Solche Geräte können beispielsweise Klimaanlagen, Kältegeräte oder auch Lüftungsgeräte sein, welche von einem Gehäuserahmen umgeben sind. Der Gehäuserahmen besteht dabei aus mehreren Wandplatten, welche über Profilstäbe miteinander verbunden sind. Die Profilstäbe sind dabei über Verbindungsvorrichtungen miteinander verbunden, welche überdies mit speziellen Abdeckkappen abgedeckt werden können.

Bekannt sind Verbindungsvorrichtungen nach DE 10 2006 020 553 A1, wobei das verbindende Element mindestens zwei senkrecht zueinander sich befindende Profilstäbe miteinander verbindet und mit Abdeckungen versehen ist. Dabei wird zwischen äußeren und inneren Abdeckungen unterschieden. Die Abdeckungen bestehen aus einem thermisch isolierenden Material, das verbindende Element aus einem Metall.

Der Nachteil der bekannten Verbindungsvorrichtungen liegt bei größeren Gehäusebausystemen in der Instabilität.

Es stellte sich daher die Aufgabe, mittels Eckverbindern oder Modulverbindern eine höhere Steifigkeit eines ganzen Modulsystems bzw. Gehäusesystems zu erreichen und eine festere Verbindung von mehreren Gehäusemodulen zu erreichen.

Die Aufgabe konnte mittels der Merkmale des Hauptanspruchs gelöst werden. Dabei beinhaltet die Erfindung eine Verbindungsvorrichtung aus zwei Teilen eines Eckverbinders.

Mittels einer Befestigungsschraube an Teil 1 des Eckverbinders und einer angepassten Bohrung an Teil 2 des Eckverbinders sind beide Teile des Eckverbinders miteinander und mit dem Profil verbunden.

Teil 1 des erfindungsgemäßen Eckverbinders besitzt drei vorspringende Ausformungen zum Verbinden von drei sich senkrecht zueinander befindenden Profilstäben.

Teil 1 des Eckverbinders kann auch einen Zentrierdorn zum Ausrichten mehrerer Gehäusemodule auf einer Baustelle besitzen.

Teil 2 des erfindungsgemäßen Eckverbinders besitzt ebenfalls vorspringende Ausformungen zum Verbinden mit Profilstäben, welche mittels Befestigungsschrauben über angepasste Bohrungen an Teil 2 des Eckverbinders arretiert sind.

Die Ecken eines Gehäuses können auch mit drei Eckprofilen verbunden werden, wenn das Gerät nicht aus mehreren Modulen sondern aus einem Teil besteht.

Wenn die Ecke eines Gehäuses mit zwei Modulprofilen und einem Eckprofil verbunden wird, ist ein Verbindungselement erforderlich, um die Lücke zu schließen.

Ohne dieses Verbindungselement müsste man zwei unterschiedliche Außen-Eckverbinder (Teil 1) verwenden.

So kann man mit den gleichen Ecken (Teil 1 und Teil 2 des Eckverbinders) beide Strukturen bilden, als Modul oder als Einzelteil.

Die erfindungsgemäße Verbindungsvorrichtung kann in einer besonderen Ausführungsform mittels einer oder mehrerer Ösen mit den Profilen des Gehäuses zum leichteren Heben mit einem Kran, verbunden sein.

Vorzugsweise werden an der Verbindungsvorrichtung als Profile drei Eckprofile oder zwei Modulprofile mit einem Eckprofil verwendet.

Die Profile haben Profilteile aus Metall, vorzugsweise Aluminium, sowie aus Kunststoff. Die Profile können auch nur aus Metall oder nur aus Kunststoff bestehen.

Die erfindungsgemäßen Eckverbinder können als Eckverbinder als solches dienen, aber auch als Modulverbinder. Bisher wurde nach dem Stand der Technik beim Verbinden mehrerer Gehäusemodule eine extra dafür konzipierte Ecke verwendet.

Mit der erfindungsgemäßen Verbindungsvorrichtung wurde eine montagefreundliche Lösung gefunden, die die Profile eines Gehäuses, auch wenn aus mehreren Modulen bestehend, durch nur drei Schauben pro Ecke, mit den zwei Verbindungselementen so befestigt, dass eine stabile Struktur entsteht.

### Zeichnungen

Figur 1 zeigt eine räumliche Darstellung einer Verbindungsvorrichtung mit drei senkrecht zueinander ausgerichteten Profilstäben.
Figur 2 zeigt eine räumliche Darstellung einer Verbindungsvorrichtung mit drei senkrecht zueinander ausgerichteten Profilstäben in der entgegengesetzten Richtung zu Figur 1.
Figur 3 zeigt eine räumliche Darstellung einer Verbindungsvorrichtung mit drei senkrecht zueinander ausgerichteten Profilstäben in der Draufsicht zu Figur 1.

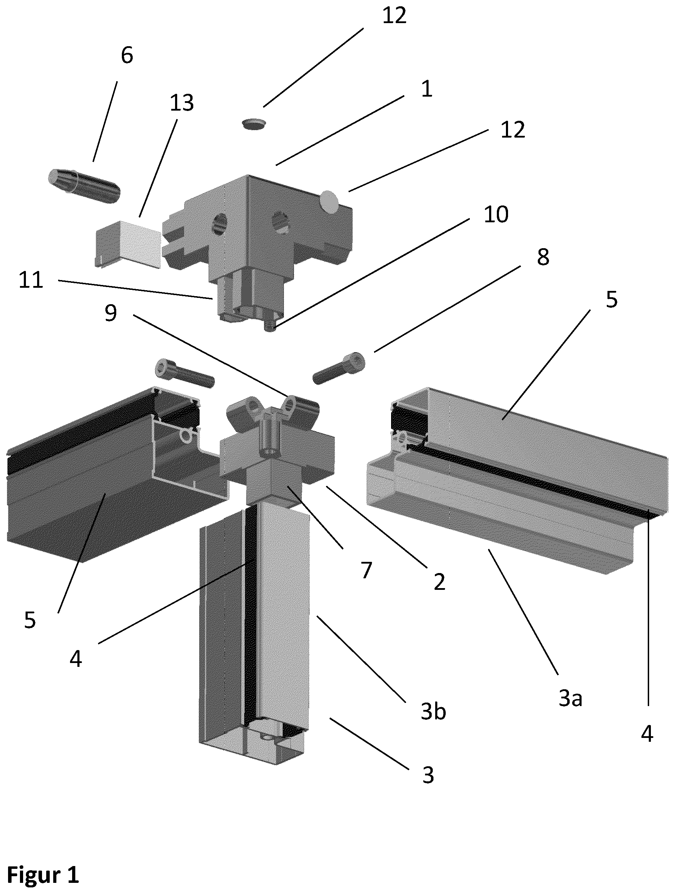

Die Figuren 1 bis 3 zeigen die Verbindungsvorrichtung aus verschiedenen Perspektiven jeweils in einer Explosionsdarstellung.

In Figur 1 werden beide Teile der Verbindungsvorrichtung, nämlich die Eckverbinder 1, 2 gezeigt.

Teil 2 des Eckverbinders 2 weist drei senkrecht zueinander angeordnete Profilstäbe 3, 3a, 3b auf. In dieser Ausführung der Erfindung sind ein Eckprofil 3a und zwei Modulprofile 3b vorhanden. Das Eckprofil 3a befindet sich an einer Ecke eines Gehäusemoduls. Die Modulprofile 3b verbinden mehrere Gehäusemodule miteinander. Beide Profilarten besitzen Profilteile aus Kunststoff 4 (schwarz dargestellt) und Teile aus Metall 5. Dadurch sind die Profile 3 des Gehäusemoduls thermisch voneinander getrennt.

Teil 2 des Eckverbinders 2 besitzt vorspringende Ausformungen 7. Die Abmessungen und Gestaltungen der vorspringenden Ausformungen 7 sind dabei an das entsprechende Profil 3 von miteinander zu verbindenden Profilstäben 3a, 3b angepasst. Dadurch können die Profilstäbe 3a, 3b einfach auf die vorspringenden Ausformungen 7 gesteckt werden.

Die Profilstäbe 3, 3a, 3b werden mittels Befestigungsschrauben 8 über entsprechende Bohrungen 9 am Teil 2 des Eckverbinders 2 mit diesem verschraubt.

Der Teil 1 des Eckverbinders 1 besitzt ebenfalls vorspringende Ausformungen 11, auf die Profilstäbe gesteckt werden können.

In der Zeichnung sieht man auch eine Befestigungsschraube 10, die dazu dient, Teil 1 des Eckverbinders 1 mit dem Teil 2 des Eckverbinders 2 zu verbinden. Die Befestigungsschraube 10 entspricht den Befestigungsschrauben 8.

Im Teil 1 des Eckverbinders 1 wird auch ein Zentrierdorn 6 gezeigt, der mehrere Gehäusemodule miteinander ausrichten kann. Gezeigt werden ebenfalls die Abdeckungen 12 sowie das Verbindungselement 13.

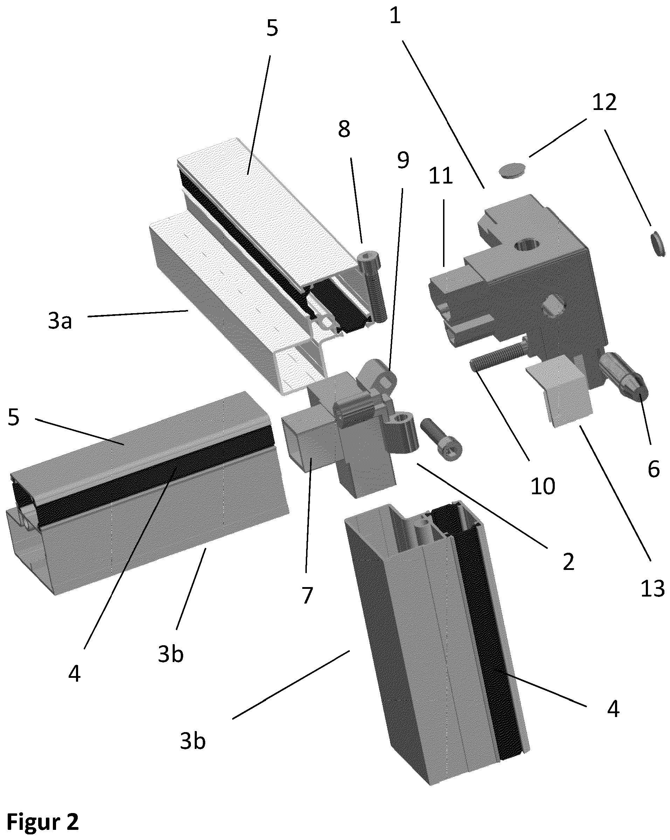

In Figur 2 werden ebenfalls beide Teile der Verbindungsvorrichtung, nämlich die Eckverbinder 1, 2 gezeigt.

Teil 2 des Eckverbinders 2 weist drei senkrecht zueinander angeordnete Profilstäbe 3, 3a, 3b auf. In dieser Ausführung der Erfindung sind ein Eckprofil 3a und zwei Modulprofile 3b vorhanden. Das Eckprofil 3a befindet sich an einer Ecke eines Gehäusemoduls. Die Modulprofile 3b verbinden mehrere Gehäusemodule miteinander. Beide Profilarten besitzen Profilteile aus Kunststoff 4 (schwarz dargestellt) und Teile aus Metall 5. Dadurch sind die Profile 3 des Gehäusemoduls thermisch voneinander getrennt.

Teil 2 des Eckverbinders 2 besitzt vorspringende Ausformungen 7. Die Abmessungen und Gestaltungen der vorspringenden Ausformungen 7 sind dabei an das entsprechende Profil 3 von miteinander zu verbindenden Profilstäben 3a, 3b angepasst. Dadurch können die Profilstäbe 3a, 3b einfach auf die vorspringenden Ausformungen 7 gesteckt werden.

Die Profilstäbe 3, 3a, 3b werden mittels Befestigungsschrauben 8 über entsprechende Bohrungen 9 am Teil 2 des Eckverbinders 2 mit diesem verschraubt.

Der Teil 1 des Eckverbinders 1 besitzt ebenfalls vorspringende Ausformungen 11, auf die Profilstäbe gesteckt werden können.

In der Zeichnung sieht man auch eine Befestigungsschraube 10, die dazu dient, Teil 1 des Eckverbinders 1 mit dem Teil 2 des Eckverbinders 2 zu verbinden. Die für die Erfindung wichtige Befestigungsschraube 10 ist in dieser, Figur 2, besser zu sehen als in Figur 1. Die Befestigungsschraube 10 entspricht auch den Befestigungsschrauben 8.

Im Teil 1 des Eckverbinders 1 wird auch ein Zentrierdorn 6 gezeigt, der mehrere Gehäusemodule miteinander ausrichten kann. Gezeigt werden ebenfalls die Abdeckungen 12 sowie das Verbindungselement 13.

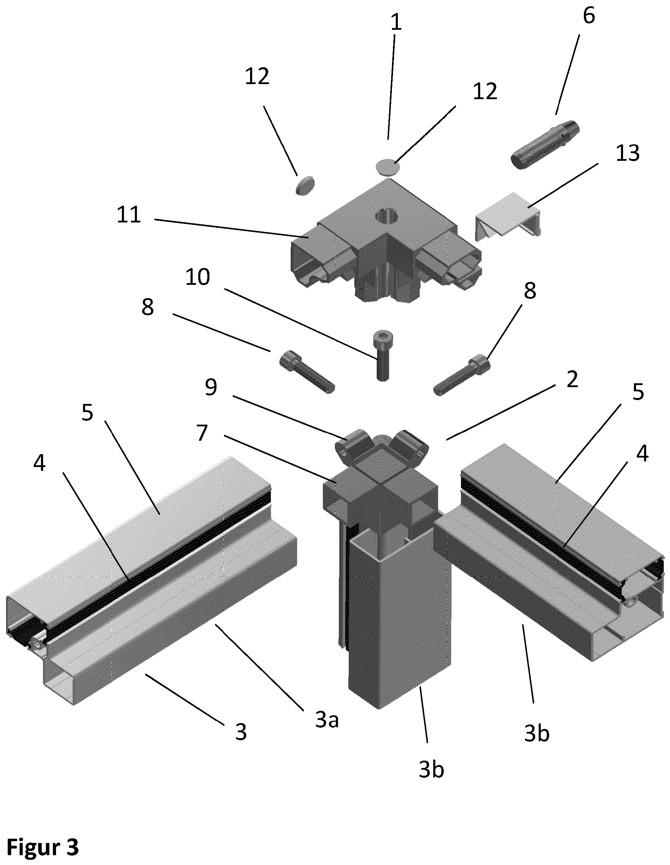

Figur 3 zeigt eine Draufsicht von beiden Teilen der Verbindungsvorrichtung, nämlich die Eckverbinder 1, 2.

Teil 2 des Eckverbinders 2 weist drei senkrecht zueinander angeordnete Profilstäbe 3, 3a, 3b auf. In dieser Ausführung der Erfindung sind ein Eckprofil 3a und zwei Modulprofile 3b vorhanden. Das Eckprofil 3a befindet sich an einer Ecke eines Gehäusemoduls. Die Modulprofile 3b verbinden mehrere Gehäusemodule miteinander. Beide Profilarten besitzen Profilteile aus Kunststoff 4 (schwarz dargestellt) und Teile aus Metall 5. Dadurch sind die Profile 3 des Gehäusemoduls thermisch voneinander getrennt.

Teil 2 des Eckverbinders 2 besitzt vorspringende Ausformungen 7. Die Abmessungen und Gestaltungen der vorspringenden Ausformungen 7 sind dabei an das entsprechende Profil 3 von miteinander zu verbindenden Profilstäben 3a, 3b angepasst. Dadurch können die Profilstäbe 3a, 3b einfach auf die vorspringenden Ausformungen 7 gesteckt werden.

Die Profilstäbe 3, 3a, 3b werden mittels Befestigungsschrauben 8 über entsprechende Bohrungen 9 am Teil 2 des Eckverbinders 2 mit diesem verschraubt.

Der Teil 1 des Eckverbinders 1 besitzt ebenfalls vorspringende Ausformungen 11, auf die Profilstäbe gesteckt werden können.

In der Zeichnung sieht man auch eine Befestigungsschraube 10, die dazu dient, Teil 1 des Eckverbinders 1 mit dem Teil 2 des Eckverbinders 2 zu verbinden. Die Befestigungsschraube 10 entspricht den Befestigungsschrauben 8.

Im Teil 1 des Eckverbinders 1 wird auch ein Zentrierdorn 6 gezeigt, der mehrere Gehäusemodule miteinander ausrichten kann. Gezeigt werden ebenfalls die Abdeckungen 12 sowie das Verbindungselement 13.

### Bezeichnungsliste

| | |
|---|---|
| Teil 1 des Eckverbinders | 1 |
| Teil 2 des Eckverbinders | 2 |
| Profil (Profilstab) | 3 |
| Eckprofil | 3a |
| Modulprofil | 3b |
| Teil des Profils aus Kunststoff (schwarz) | 4 |
| Teil des Profils aus Metall | 5 |
| Zentrierdorn | 6 |
| vorspringende Ausformung des Teil 2 des Eckverbinders | 7 |
| Befestigungsschraube | 8 |
| angepasste Bohrungen für Befestigungsschrauben | 9 |
| Befestigungsschraube für Teil 1 des Eckverbinders | 10 |
| vorspringende Ausformung des Eckverbinders Teil 1 | 11 |
| Abdeckung | 12 |
| Verbindungselement | 13 |

## Patentansprüche

1. Verbindungsvorrichtung zur Verbindung von Profilen (3) in Gehäusebausystemen, **dadurch gekennzeichnet, dass** die Verbindungsvorrichtung aus zwei Teilen eines Eckverbinders (1, 2) besteht.

2. Verbindungsvorrichtung zur Verbindung von Profilen (3) in Gehäusebausystemen gemäß Anspruch 1, **dadurch gekennzeichnet, dass** mittels einer Befestigungsschraube (10) an Teil 1 des Eckverbinders (1) und einer angepassten Bohrung (9) an Teil 2 des Eckverbinders (2) beide Teile des Eckverbinders (1, 2) miteinander und mit dem Profil (3) verbunden sind.

3. Verbindungsvorrichtung zur Verbindung von Profilen (3) in Gehäusebausystemen gemäß Anspruch 1 und/oder 2, **dadurch gekennzeichnet, dass** Teil 1 des Eckverbinders (1) vorspringende Ausformungen (11) zum Verbinden von drei sich senkrecht zueinander befindenden Profilstäben (3) besitzt.

4. Verbindungsvorrichtung zur Verbindung von Profilen in Gehäusebausystemen gemäß einem oder mehreren der Ansprüche 1 bis 3, **dadurch gekennzeichnet, dass** Teil 1 des Eckverbinders (1) einen Zentrierdorn (6) zum Ausrichten mehrerer Gehäusemodule auf einer Baustelle besitzen kann.

5. Verbindungsvorrichtung zur Verbindung von Profilen (3) in Gehäusebausystemen gemäß einem oder mehreren der Ansprüche 1 bis 4, **dadurch gekennzeichnet, dass** Teil 2 des Eckverbinders (2) vorspringende Ausformungen (7) zum Verbinden mit Profilstäben (3, 3a, 3b) besitzt, welche mittels Befestigungsschrauben (8) über angepasste Bohrungen (9) an Teil 2 des Eckverbinders (2) arretiert sind.

6. Verbindungsvorrichtung zur Verbindung von Profilen (3) in Gehäusebausystemen gemäß einem oder mehreren der Ansprüche 1 bis 5, **dadurch gekennzeichnet, dass** die Verbindungsvorrichtung mittels einer oder mehrerer Ösen mit den Profilen (3) des Gehäuses zum leichteren Heben mit einem Kran, verbunden werden kann.

7. Verbindungsvorrichtung zur Verbindung von Profilen (3) in Gehäusebausystemen gemäß einem oder mehreren der Ansprüche 1 bis 6, **dadurch gekennzeichnet, dass** als Profile (3) drei Eckprofile (3a) oder zwei Modulprofile (3b) mit einem Eckprofil (3a) verwendet werden.

8. Verbindungsvorrichtung zur Verbindung von Profilen (3) in Gehäusebausystemen gemäß einem oder mehreren der Ansprüche 1 bis 7, **dadurch gekennzeichnet, dass** die Profile (3, 3a, 3b) aus Profilteilen aus Metall (5) und Kunststoff (4) oder nur aus Metall oder Kunststoff bestehen.
